# EUROPÄISCHE PATENTANMELDUNG

(11) **EP 0 945 667 A1**
(43) Veröffentlichungstag der Anmeldung: **29.09.1999**
(21) Anmeldenummer: 99101867.2
(22) Anmeldetag: 28.01.1999
(51) Int. Cl.: F16M 11/04, F16M 11/14, F16M 11/12

(54) **Gelenkstativ**

(30) Priorität: 23.03.1998 DE 19812623
(71) Anmelder: Hörger Gässler OHG, 89567 Sontheim (DE)
(72) Erfinder: Hörger, Hans, 89567 Sontheim (DE)
(74) Vertreter: Lorenz, Werner, Dipl.-Ing.

(57) **Zusammenfassung**

Ein Gelenkstativ (1) ist mit wenigstens zwei Armen (2,3 bzw. 4) versehen, die jeweils über einen Gelenkzapfen (5,6) miteinander verbunden sind und weist folgende Merkmale auf: Eine Hydraulikleitung (12), die durch wenigstens einen Teil der Länge der wenigstens zwei Arme (2,3) sowie durch die Gelenkzapfen (5,6) verläuft sowie eine Betätigungseinrichtung, welche mit der Hydraulikleitung (12) verbunden ist. Durch die Betätigungseinrichtung ist auf die Hydraulikleitung (12) Druck aufbringbar, wodurch die Arme (2,3 bzw. 4) jeweils im Bereich der Gelenkzapfen (5,6) miteinander verspannbar bzw. festklemmbar sind. Wenigstens einer der beiden Arme (2,3) ist zweiteilig ausgebildet und mit einer Verbindungseinrichtung (7) derart verbunden, daß der erste Armteil (3a) gegenüber dem zweiten Armteil (3b) um eine Längsachse des wenigstens einen Armes (3) verdrehbar ist. Der erste Armteil (3a) ist gegenüber dem zweiten Armteil (3b) über die Verbindungseinrichtung (7) beim Festklemmen der Arme (2,3 bzw. 4) ebenfalls durch die Betätigungseinrichtung festklemmbar.

## Beschreibung

Die Erfindung betrifft ein Gelenkstativ mit wenigstens zwei Armen, die jeweils über einen Gelenkzapfen miteinander verbunden sind, mit einer Hydraulikleitung, die durch wenigstens einen Teil der Länge der wenigstens zwei Arme sowie durch die Gelenkzapfen verläuft, mit einer Betätigungseinrichtung, welche mit der Hydraulikleitung verbunden ist, wobei durch die Betätigungseinrichtung auf die Hydraulikleitung Druck aufbringbar ist, wodurch die Arme jeweils im Bereich der Gelenkzapfen miteinander verspannbar bzw. festklemmbar sind.

Ein gattungsgemäßes Gelenkstativ ist aus der DE 40 11 188 C2 bekannt.

Durch die dabei vorgesehene Betätigungseinrichtung können sowohl die zwischen den Armen des Gelenkstativs vorgesehenen Gelenkzapfen als auch eventuelle an den Enden der Arme vorgesehene Gelenkglieder des Stativs mit nur einer Hand gleichzeitig hydraulisch festgeklemmt werden. Somit liegt ein Gelenkstativ vor, welches einerseits variabel und andererseits leicht zu bedienen ist. Die Klemmung kann dabei z.B. durch das Verdrehen eines Sterngriffs erfolgen, wodurch ein Gewindeansatz tiefer in eine Gewindebohrung des Gelenkzapfens eingeschraubt wird.

Die eventuellen weiteren Gelenkglieder sind dann jeweils an den den Gelenkzapfen abgewandten Enden der Arme angebracht. Durch diese Gelenkglieder kann das Gelenkstativ z.B. mit einem Ständer verbunden und auf einem Tisch befestigt werden. Andererseits ist es möglich, an einem solchen Gelenk eine Halteeinrichtung, z.B. für eine Meßuhr oder einen Laser, anzubringen.

Für bestimmte Anwendungen ist die Variabilität dieses aus dem Stand der Technik bekannten Gelenkstativs allerdings noch nicht ausreichend.

Es ist daher Aufgabe der vorliegenden Erfindung, ein Gelenkstativ zu schaffen, welches eine noch größere Variabilität besitzt. Die einfache Bedienbarkeit der bekannten Gelenkstative soll dabei erhalten bleiben.

Erfindungsgemäß wird diese Aufgabe dadurch gelöst, daß wenigstens einer der beiden Arme zweiteilig ausgebildet und mit einer Verbindungseinrichtung derart verbunden ist, daß der erste Armteil gegenüber dem zweiten Armteil um eine Längsachse des wenigstens einen Armes verdrehbar ist, und daß der erste Armteil gegenüber dem zweiten Armteil über die Verbindungseinrichtung beim Festklemmen der Arme ebenfalls durch die Betätigungseinrichtung festklemmbar ist.

Durch diese Verdrehbarkeit um die Längsachse ist das Gelenkstativ sehr viel variabler als bisher, da eine Drehung um die Längsachse eines Armes eine völlig andere Verstellmöglichkeit bietet als das bisher bekannte Verdrehen um die Gelenkzapfen zwischen den Armen bzw. an weiteren Gelenken, welche an den Enden der Arme angebracht sein können. Somit kann ein an dem Gelenkstativ angebrachtes Instrument, wie z.B. eine Meßuhr oder auch ein medizinisch-therapeutisches Gerät, sehr viel leichter in die gewünschte Position gebracht werden.

Dadurch, daß die Verbindungseinrichtung zwischen den beiden Armteilen durch dieselbe Betätigungseinrichtung wie auch die anderen Gelenkstellen gespannt werden kann, wird die einfache Handhabung des Gelenkstativs auch weiterhin beibehalten, welches vorteilhafterweise mit nur einer Hand, z.B. durch Verdrehen eines Griffs oder durch einen Knopfdruck, gespannt werden kann.

In einer vorteilhaften Weiterbildung der Erfindung kann vorgesehen sein, daß die Verbindungseinrichtung ein Gehäuseteil mit einer Bohrung aufweist, in welcher ein Stellkolben in Längsrichtung verschieblich angeordnet ist, wobei ein Abschnitt der Hydraulikleitung durch den Stellkolben geführt ist.

Dabei kann vorteilhafterweise das Spannen der beiden Armteile gegeneinander durch den innerhalb der Bohrung des Gehäuseteiles der Verbindungseinrichtung angeordneten und durch den Druck in der Hydraulikleitung um einen gewissen Betrag verschieblichen Stellkolben übernommen werden.

Es kann ferner vorgesehen sein, daß der Stellkolben mit einer wenigstens annähernd zylindrischen Auskragung versehen ist, durch welche wenigstens eine von der Hydraulikleitung abzweigende Hydraulikbohrung verläuft, welche in einen zwischen dem Gehäuseteil und der zylindrischen Auskragung sich bildenden Druckraum mündet.

Dies stellt eine einfache, sichere und zuverlässige Möglichkeit dar, mit der vorhandenen Hydraulikleitung und der ebenfalls vorhandenen Betätigungseinrichtung ein Verspannen des verdrehbaren Armes zu ermöglichen.

Weitere vorteilhafte Ausgestaltungen und Weiterbildungen der Erfindung ergeben sich aus den restlichen Unteransprüchen sowie aus dem nachfolgend anhand der Zeichnung prinzipmäßig dargestellten Ausführungsbeispiel.

Es zeigt:
- Fig. 1: ein erfindungsgemäßes Gelenkstativ mit einem Teilschnitt durch Gelenkstellen zwischen einzelnen Armen des Gelenkstativs; und
- Fig. 2: das Gelenkstativ mit einem Teilschnitt nach der Linie II-II aus Fig. 1.

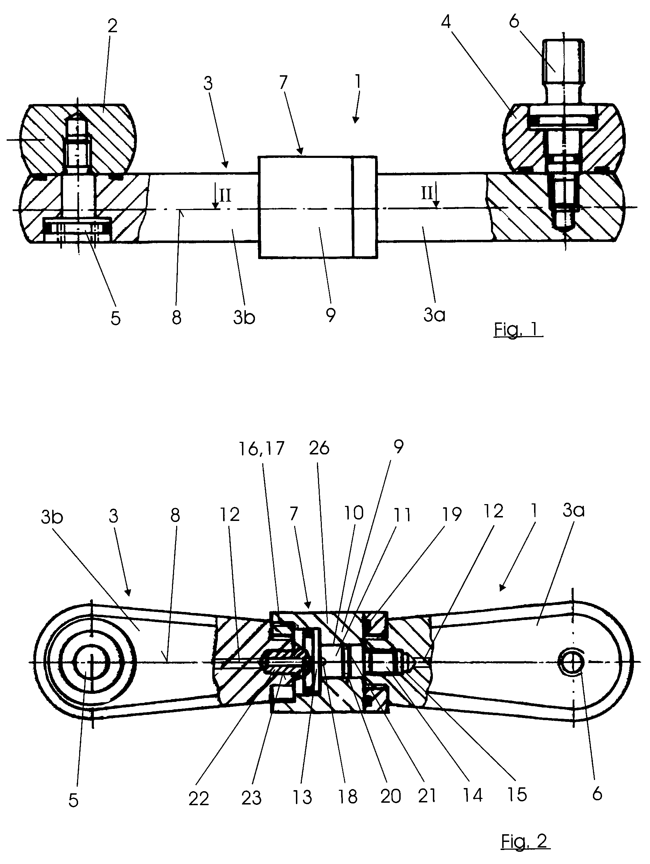

Die Figuren 1 und 2 zeigen ein Gelenkstativ 1, welches gemäß Fig. 2 in diesem Fall aus drei Armen 2, 3 und 4 aufgebaut ist. Der mittlere, in beiden Figuren vollständig dargestellte Arm 3 ist mit den Armen 2 und 4 über Gelenkzapfen 5 und 6 verbunden. Der Aufbau der Gelenkzapfen 5 und 6 ist für sich aus der DE 40 11 188 C2 bekannt, weshalb er im folgenden nicht näher beschrieben wird. An das Gelenkstativ 1 können in an sich bekannter Weise nicht dargestellte Geräte oder Einrichtungen, wie z.B. eine Meßuhr oder ein medizinisch-therapeutisches Gerät angebracht werden.

Der mittlere Arm 3 ist aus zwei Armteilen 3a und 3b aufgebaut, wobei die beiden Armteile 3a und 3b über eine Verbindungseinrichtung 7 miteinander verbunden sind. Durch die Verbindungseinrichtung 7 sind die beiden Armteile 3a und 3b um eine Längsachse 8 des Armes 3 gegeneinander um beliebige Winkel verdrehbar.

Hierzu weist die Verbindungseinrichtung 7 ein Gehäuseteil 9 mit einer zentralen Bohrung 10 und einen in der zentralen Bohrung 10 drehbar und in Längsrichtung verschieblich gelagerten Stellkolben 11 auf. Durch den Stellkolben 11 verläuft in Längsrichtung desselben eine Hydraulikleitung 12, die in nicht dargestellter Weise auch durch die Arme 2, 3 und 4, jeweils in Längsrichtung derselben, sowie durch die Gelenkzapfen 5 und 6 geführt ist. Die Hydraulikleitung 12 ist mit einer nicht dargestellten Betätigungseinrichtung verbunden, durch welche die Gelenkzapfen 5 und 6 in an sich bekannter Weise durch Beaufschlagung mit Druck festklemmbar sind. Auf diese Art und Weise kann das gesamte Gelenkstativ 1 in einer bestimmten Position festgeklemmt werden.

Die Betätigungseinrichtung kann dabei z.B. ein Sterngriff sein, an dessen Ende ein Gewindeansatz angebracht ist, der in eine Gewindebohrung eingreift. Alternativ ist auch eine externe hydraulische oder pneumatische Beaufschlagung der Hydraulikleitung 12 möglich. In diesem Fall könnte die Betätigungseinrichtung einen einfachen Knopf aufweisen, der zum Verspannen der Gelenkzapfen gedrückt werden müßte.

Der Stellkolben 11 weist an der dem zweiten Armteil 3b zugewandten Seite der Bohrung 10 eine zylindrische Auskragung 13 auf, welche so die Bewegung des Stellkolbens 11 in dem Gehäuseteil 9 in Längsrichtung begrenzt. Auf der der zylindrischen Auskragung 13 gegenüberliegenden Seite der zentralen Bohrung 10 ist der Stellkolben 11 über einen Gewindeansatz 14 fest mit dem ersten Armteil 3a verbunden. Hierzu weist der erste Armteil 3a eine Gewindebohrung 15 auf. Das Gehäuseteil 9 weist an der dem zweiten Armteil 3b zugewandten Seite ein Innengewinde 16 mit relativ großem Durchmesser auf, welches an ein an dem zweiten Armteil 3b angebrachten Außengewinde 17 angeschraubt ist.

Von der Hydraulikleitung 12 zweigt im Bereich der zylindrischen Auskragung 13 eine Hydraulikbohrung 18 ab, welche durch die zylindrische Auskragung 13 hindurchgeführt ist und somit im Bereich der zentralen Bohrung 10 in einen sich zwischen dem Gehäuseteil 9 und der zylindrischen Auskragung 13 bildenden Druckraum 26 mündet. Durch die Hydraulikbohrung 18 kann somit Druckflüssigkeit in den dem zweiten Armteil 3b abgewandten Bereich der zylindrischen Auskragung 13 strömen. Dadurch wird bei einer Druckbeaufschlagung der Hydraulikleitung 12 der Druckraum 26 druckbeaufschlagt und der Stellkolben 11 wird in Richtung des zweiten Armteils 3b gedrückt, wodurch über die Verbindung zwischen dem Gewindeansatz 14 und der Gewindebohrung 15 auch der erste Armteil 3a angezogen wird. Dadurch verspannt sich letztendlich der erste Armteil 3a gegen den zweiten Armteil 3b und die beiden Armteile 3a und 3b können nicht mehr gegeneinander verdreht werden.

Um Leckagen zu vermeiden und einen sicheren Betrieb des Gelenkstatives 1 zu gewährleisten, sind die beschriebenen unter Druck stehenden Bauteile mit verschiedenen Dichtungseinrichtungen versehen. So ist zwischen dem ersten Armteil 3a und dem Gehäuseteil 9 eine Dichtungseinrichtung in Form einer Flachdichtung 19 angebracht. Zwischen dem Stellkolben 11 und der zentralen Bohrung 10 des Gehäuseteils 9 befindet sich in dem Stellkolben 11 eine Nut 20, in welcher eine Dichtungseinrichtung in Form eines Quadrings 21 eingesetzt ist.

Schließlich ist noch ein an der zylindrischen Auskragung 13 angebrachter Zapfen 22 des Stellkolbens 11, der sich aus Gründen der besseren Führung in einer zentralen Bohrung 23 des zweiten Armteils 3b befindet, mit einer Nut 24 und einer sich darin befindlichen Dichtungseinrichtung in Form eines Quadrings 25 versehen. Somit ist sichergestellt, daß durch Druckbeaufschlagung der Hydraulikleitung 12 über die Betätigungseinrichtung das in die Hydraulikbohrung 18 strömende Druckmedium die beiden Armteile 3a und 3b gegeneinander festklemmt.

## Patentansprüche

1. Gelenkstativ (1) mit wenigstens zwei Armen (2,3 bzw. 4), die jeweils über einen Gelenkzapfen (5,6) miteinander verbunden sind, mit folgenden Merkmalen:
1.1 eine Hydraulikleitung (12), die durch wenigstens einen Teil der Länge der wenigstens zwei Arme (2,3 bzw. 4) sowie durch die Gelenkzapfen (5,6) verläuft,
1.2 eine Betätigungseinrichtung, welche mit der Hydraulikleitung (12) verbunden ist,
1.3 durch die Betätigungseinrichtung ist auf die Hydraulikleitung (12) Druck aufbringbar, wodurch die Arme (2,3 bzw. 4) jeweils im Bereich der Gelenkzapfen (5,6) miteinander verspannbar bzw. festklemmbar sind,
**dadurch gekennzeichnet**, daß
1.4 wenigstens einer der beiden Arme (2,3) zweiteilig ausgebildet und mit einer Verbindungseinrichtung (7) derart verbunden ist, daß der erste Armteil (3a) gegenüber dem zweiten Armteil (3b) um eine Längsachse (8) des wenigstens einen Armes (3) verdrehbar ist, und daß
1.5 der erste Armteil (3a) gegenüber dem zweiten Armteil (3b) über die Verbindungseinrichtung (7) beim Festklemmen der Arme (2,3 bzw. 4) ebenfalls durch die Betätigungseinrichtung festklemmbar ist.

2. Gelenkstativ nach Anspruch 1,
**dadurch gekennzeichnet,** daß
die Verbindungseinrichtung (7) ein Gehäuseteil (9) mit einer Bohrung (10) aufweist, in welcher ein Stellkolben (11) in Längsrichtung verschieblich angeordnet ist, wobei ein Abschnitt der Hydraulikleitung (12) durch den Stellkolben (11) geführt ist.

3. Gelenkstativ nach Anspruch 2,
**dadurch gekennzeichnet,** daß
der Stellkolben (11) mit einer wenigstens annähernd zylindrischen Auskragung (13) versehen ist, durch welche wenigstens eine von der Hydraulikleitung (12) abzweigende Hydraulikbohrung (18) verläuft, welche in einen zwischen dem Gehäuseteil (9) und der zylindrischen Auskragung (13) sich bildenden Druckraum (26) mündet.

4. Gelenkstativ nach Anspruch 2 oder 3,
**dadurch gekennzeichnet,** daß
der Stellkolben (11) mit dem ersten Armteil (3a) befestigbar verbunden ist, und daß das Gehäuseteil (9) mit dem zweiten Armteil (3b) befestigbar verbunden ist.

5. Gelenkstativ nach Anspruch 4,
**dadurch gekennzeichnet,** daß
der Stellkolben (11) mit dem ersten Armteil (3a) und das Gehäuseteil (9) mit dem zweiten Armteil (3b) über Schraubverbindungen (14,15 bzw. 16,17) befestigbar miteinander verbunden sind.

6. Gelenkstativ nach einem der Ansprüche 2 bis 5,
**dadurch gekennzeichnet,** daß
zwischen dem ersten Armteil (3a) und dem Gehäuseteil (9) eine Dichtungseinrichtung (19) angeordnet ist.

7. Gelenkstativ nach einem der Ansprüche 2 bis 6,
**dadurch gekennzeichnet,** daß
zwischen dem Stellkolben (11) und der Bohrung (10) des Gehäuseteils (9) eine Dichtungseinrichtung (21) angeordnet ist.

8. Gelenkstativ nach einem der Ansprüche 2 bis 7,
**dadurch gekennzeichnet,** daß
zwischen einem Zapfen (22) des Stellkolbens (11) und einer Bohrung (23) des zweiten Armteils (3b) eine Dichtungseinrichtung (25) angeordnet ist.

9. Gelenkstativ nach einem der Ansprüche 2 bis 8,
**dadurch gekennzeichnet,** daß
die Hydraulikleitung (12) wenigstens annähernd zentral durch den Stellkolben (11) verläuft.
